# FASCICULE DE BREVET EUROPEEN

(11) **EP 2 965 269 B1**
(45) Date de publication et mention de la délivrance du brevet: **22.08.2018**
(21) Numéro de dépôt: 14713215.3
(22) Date de dépôt: 05.03.2014
(51) Int. Cl.: G06N 3/063

(54) **ORGANE À NEURONE ARTIFICIEL ET MEMRISTOR**
KÜNSTLICHES NEURON UND MEMRISTOR
ARTIFICIAL NEURON AND MEMRISTOR

(30) Priorité: 05.03.2013 FR 1351979
(43) Date de publication de la demande: 13.01.2016
(73) Titulaire: Université de Bordeaux, 33000 Bordeaux (FR); Centre National de la Recherche Scientifique (C.N.R.S.), 75794 Paris Cedex 16 (FR); Institut Polytechnique de Bordeaux 1, 33402 Talence Cedex (FR)
(72) Inventeur: SAÏGHI, Sylvain, F-33400 Talence (FR); TOMAS, Jean, F-33600 Pessac (FR); LECERF, Gwendal, 76400 Eperville (FR)
(74) Mandataire: Lavoix
(86) Numéro de dépôt international: PCT/FR2014/050503
(87) Numéro de publication internationale: WO 2014/135801

(56) Documents cités:
- WO-A1-2010/142762
- US-A- 5 206 541
- OZRA SHARIFIPOOR ET AL: "An analog implementation of biologically plausible neurons using CCII building blocks", NEURAL NETWORKS, vol. 36, 1 décembre 2012 (2012-12-01), pages 129-135, XP055081019, ISSN: 0893-6080, DOI: 10.1016/j.neunet.2012.08.017
- PERSHIN YU V ET AL: "Emulation of floating memcapacitors and meminductors using current conveyors", ELECTRONIC LETTERS, THE INSTITUTION OF ENGINEERING AND TECHNOLOGY, vol. 47, no. 4, 17 février 2011 (2011-02-17), pages 243-244, XP006038047, ISSN: 1350-911X, DOI: 10.1049/EL:20107328
- ANDREOU A G ET AL: "CURRENT-MODE SUBTHRESHOLD MOS CIRCUITS FOR ANALOG VLSI NEURAL SYSTEMS", IEEE TRANSACTIONS ON NEURAL NETWORKS, IEEE SERVICE CENTER, PISCATAWAY, NJ, US, vol. 2, no. 2, 1 mars 1991 (1991-03-01), pages 205-213, XP000202572, ISSN: 1045-9227, DOI: 10.1109/72.80331

## Description

L'invention concerne les neurones artificiels et les réseaux de neurones.

Les réseaux de neurones sont encore peu utilisés dans l'industrie en l'absence de solution technique viable, que ce soit en termes de consommation ou de rapport coût de développement-performance. Lorsque les réseaux de neurones sont utilisés, ils sont implémentés au plan logiciel dans une architecture classique de calcul qui réalise un calcul sériel des opérations. Dès lors, les performances peuvent être dégradées dans les réseaux à grande échelle en raison de la quantité d'opérations à effectuer. De plus, la robustesse du système est faible en cas de défaillance d'un élément de l'unité de calcul.

Afin de construire des systèmes plus efficaces, on cherche aujourd'hui à s'inspirer des principes biologiques en effectuant certaines approximations sur le modèle utilisé pour simuler l'activité des cellules vivantes, comme le propose le document OZRA SHARIFIPOOR ET AL: « An analog implementation of biologically plausible neurons using CCII building blocks », NEURAL NETWORKS. C'est ce qui conduit notamment à utiliser des réseaux de neurones à potentiel d'action (ou *spiking neural network*).

L'invention concerne ainsi en particulier les puces neuromorphiques. Celles-ci comprennent des réseaux de neurones analogiques ou mixtes et sont susceptibles de servir en matière d'intelligence artificielle, par exemple dans les dispositifs de reconnaissance de forme. Les puces neuromorphiques comprennent trois parties : des neurones artificiels, des synapses et des éléments de mémoire qui stockent le poids synaptique. De plus, les poids synaptiques évoluent durant la période d'apprentissage du système grâce à un algorithme qui est implémenté dans une autre partie du système.

A cette fin, on a envisagé de mémoriser l'information soit par des points de mémoire numérique, soit par une mémoire analogique composée d'un condensateur dont il faut rafraîchir la tension aux bornes ou d'un transistor à grille flottante. Ces trois solutions nécessitent d'effectuer un calcul de plasticité dans une autre partie du système (comme indiqué ci-dessus) et le résultat du calcul devient la nouvelle valeur à mémoriser.

Cependant, ces solutions engendrent soit une forte consommation de courant, soit une complexité de mise en oeuvre, soit encore un manque de précision de la valeur mémorisée.

Pour tenter de pallier ces inconvénients, il a été imaginé d'utiliser le nouveau composant appelé memristor mis à jour sous ce nom en 2008. Cet organe présente une résistance non volatile et qui varie de façon non linéaire en fonction de la tension appliquée. Lorsqu'on lui applique une tension, sa résistance varie de façon continue et le dispositif mémorise la valeur de résistance une fois que la tension a disparu. Il présente donc une plasticité intrinsèque. Cet organe peut alors se comporter comme une synapse artificielle. Il a pour avantage d'être de taille très petite (quelques centaines de nanomètres carrés) et de consommer très peu de courant s'agissant d'un élément passif (une résistance) de plusieurs kilo-ohms. Ce composant permet donc d'envisager de réaliser des réseaux de neurones artificiels de grandes dimensions. Avec des réseaux de neurones à potentiel d'action basés sur une architecture à circuits analogiques couplée à des memristors, il devient possible d'envisager des accélérateurs de calcul à haute performance capables d'effectuer des tâches lourdes et complexes.

Néanmoins, la mise au point de tels systèmes est encore balbutiante. Le document "On spike-timing-dependent-plasticity, memristive devices, and building a self-learning visual cortex," C. Zamarreno-Ramos, L. A. Camunas-Mesa, J. A. Perez-Carrasco, T. Masquelier, T. Serrano-Gotarredona, and B. Linares-Barranco, Frontiers in Neuroscience, vol. 5, no.00026, 2011, présente une solution pour combiner les réseaux de neurones à potentiel d'action avec des memristors pour réaliser des synapses excitatrices et inhibitrices. Toutefois, la solution décrite nécessite de modifier de façon drastique le design des neurones en silicium pour obtenir les deux types de synapses.

Un but de l'invention est de simplifier et d'améliorer l'utilisation des memristors mis en oeuvre dans les réseaux de neurones artificiels. Plus particulièrement, l'invention vise à améliorer les couplages [neurone artificiel/memristor] formant les synapses rencontrés dans les réseaux de neurones artificiels.

A cet effet, il est proposé un organe à neurone artificiel, qui comprend :
- au moins un neurone artificiel,
- au moins un convoyeur de courant connecté à une entrée du neurone, et
- au moins un memristor connecté au convoyeur de courant.

Au sens de la présente invention, on entend par « neurone artificiel », un circuit électronique de calcul ou unité de traitement de données, tel qu'un processeur élémentaire. Un tel circuit électronique est conçu pour pouvoir générer un signal électrique sur la base de différents signaux électriques qui lui parviennent. Le signal généré en sortie dudit neurone résulte ainsi de la transformation/intégration des données reçues en entrée, selon une fonction de transition (on parle aussi de fonction d'activation ou fonction de transfert).

Différents types de design et d'architecture de neurones artificiels sont déjà connus de l'homme de l'art. A titre non limitatif, on peut notamment citer : Axon-Hillock circuit, Integrate-and-fire neuron circuits, Leaky Integrate-and-fire neuron circuits, Hodgkin-Huxley neuron circuits (cf. J. Misra et al., Neurocomputing 74 (2010) 239-255 ; G. Indiveri et al., Frontiers in neuroscience 5 (2011) article 73).

Par ailleurs, on entend par « convoyeur de courant » (ou « circuit convoyeur de courant »), un circuit actif amplificateur de courant présentant trois ports, conventionnellement notés X et Y pour les deux ports d'entrée et Z, pour le port de sortie.

Le principe de fonctionnement des convoyeurs de courant, aujourd'hui bien connu de l'homme du métier, peut être représenté par une équation matricielle liant courants et tensions à ses trois ports.

Schématiquement, la propriété du port X est de recopier sur son terminal la tension appliquée en Y (V_{X} = V_{Y}).

Le port X est aussi une entrée/sortie pour un courant lx. Le port Z fournit un courant

I_{Z}= α.Ix. Pour α > 0, le convoyeur est dit de type positif ; pour α < 0, le convoyeur est dit de type négatif.

Enfin, on entend par « organe à neurone artificiel » un assemblage de composants électroniques formant ou destiné à former tout ou partie d'un réseau de neurones artificiels.

L'invention porte ainsi sur un assemblage de composants électroniques consistant en un couplage fonctionnel [neurone artificiel/memristor/convoyeur de courant] ou un assemblage de composants électroniques intégrant au moins un couplage fonctionnel [neurone artificiel/memristor/convoyeur de courant].

Un organe à neurone artificiel selon l'invention est défini par les revendications annexées. L'invention s'étend également à tout dispositif, notamment comprenant au moins un organe selon l'invention.

Nous allons maintenant présenter des modes de réalisation de l'invention à titre d'exemples non-limitatifs en référence aux dessins annexés sur lesquels ;
- les figures 1 et 2 sont des courbes illustrant l'évolution de la résistance d'un memristor en fonction des impulsions de tension bipolaire qui lui sont appliquées ;
- la figure 3 est une courbe illustrant la forme d'un potentiel d'action utilisé dans le cadre de l'invention ;
- la figure 4 présente des courbes analogues à la figure 1 dans le cas du potentiel d'action illustré à la figure 3 ;
- la figure 5 est un schéma d'une partie d'un dispositif selon l'invention montrant l'association d'un memristor, d'un convoyeur de courant et d'un neurone ;
- les figures 6, 7 et 8 sont des schémas montrant des exemples d'application du schéma de la figure 5 ;
- la figure 9 montre des courbes expérimentales obtenues par simulation au moyen du schéma de la figure 8 ; et
- la figure 10 illustre une variante de réalisation du schéma de la figure 5.

Les memristors sont des composants qui ont une résistance dont la valeur dépend de la charge électrique qui les traverse. En l'occurrence, plus le courant qui les traverse est important, plus la valeur de la résistance décroît. Cette valeur de résistance est non volatile.

On utilise ici avantageusement un memristor à couche ferroélectrique tel que décrit dans la demande WO 2010/142762. Dans ce composant, le changement de la valeur de la résistance est dû uniquement à des effets électroniques et préserve par conséquent le composant en lui-même. Ce composant est basé sur un concept physique radicalement différent des solutions existantes : la ferroélectricité à jonction à effet tunnel.

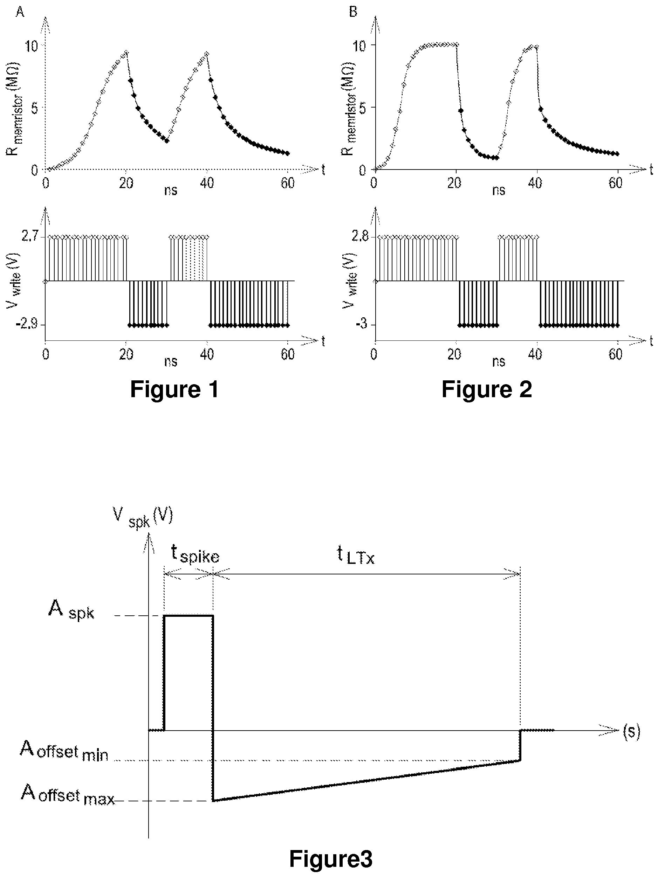

On a illustré à la figure 1, en fonction du temps, les impulsions de tension V_{write} appliquées aux bornes du memristor en partie basse de la figure, et la résistance Rmemristor du composant en partie haute. C'est ainsi qu'on applique d'abord une série d'impulsions positives de 2,7 V puis une série d'impulsions négatives de -2,9 V. On recommence ensuite le même enchaînement. On observe que la valeur de la résistance augmente en fonction du nombre d'impulsions positives. Ensuite, sa décroissance est également proportionnelle au nombre d'impulsions négatives. Cette caractéristique est utilisée dans les réseaux de neurones où les poids synaptiques changent en fonction de l'activité en termes de potentiel. L'asymétrie est due à la constitution du dispositif. A la figure 2, l'amplitude des impulsions positives et négatives devient respectivement 2,8 V et -3 V. L'augmentation et la réduction de la résistance sont plus rapides. Il existe en outre une autre propriété intéressante : les amplitudes des impulsions situées entre -2,45 V et 1,3 V ne modifient pas la valeur de résistance du memristor bipolaire. Par conséquent, les modes d'écriture et de lecture dépendent de la tension appliquée au memristor. Ces deux propriétés sont utilisées pour la mise en oeuvre de la règle de plasticité.

Nous donnons ci-après quelques indications sur la plasticité des réseaux de neurones. Les mécanismes d'apprentissage sont liés directement à la plasticité synaptique du réseau. Dans les réseaux de calcul artificiels, on utilise communément la plasticité qui dépend du rythme des potentiels d'action (*spike*), également appelée *spike-timing dependent plasticity* (STDP). Il s'agit d'un type de modification synaptique qui dépend de l'enchaînement dans le temps des potentiels d'action pré- et postsynaptiques. On définit ainsi Δt = tₚₒₛₜ - tₚᵣₑ où tₚᵣₑ représente l'instant de l'événement du neurone présynaptique et tₚₒₛₜ l'instant de l'événement du neurone postsynaptique. Lorsque cet intervalle est positif, la phénoménologie de potentialisation à long terme (LTP pour *long-term potentiation*) augmente le poids de la synapse, et lorsqu'il est négatif, le mécanisme de dépression à long terme (LTD pour *long-term depression*) en décroît le poids.

Dans le cadre de la présente mise en oeuvre de l'invention, chaque synapse entre les neurones pré- et postsynaptiques comprend un memristor. Grâce à leurs propriétés, la différence entre les deux instants de la plasticité dépendant du rythme des potentiels d'action est convertie en une différence de potentiel Vmemristor, à savoir la différence de potentiel aux bornes du memristor. La forme et l'amplitude du potentiel d'action du neurone sont donc essentielles. La conductance du memristor, équivalente au poids synaptique, va donc changer seulement lorsque les événements pré- et postsynaptiques se produisent dans une fenêtre temporelle brève, ce qui implique que la tension entre les neurones situés en amont et en aval est suffisante pour entraîner une modification de poids. Dans le cas d'un simple potentiel d'action, la tension du potentiel d'action est comprise dans la gamme [-2,45 V ; 1,3 V] et ne produit pas de modification de poids.

On utilise en l'espèce la forme de potentiel d'action illustrée à la figure 3. Cette forme peut être divisée en deux phases. La première phase qui correspond au potentiel positif peut être considérée comme le potentiel d'action normal et sa durée tₛₚᵢₖₑ règle la largeur de l'impulsion de tension appliquée aux bornes du memristor pour une éventuelle modification de conductance. La deuxième phase correspond à la tension négative et a une durée de t_{LTx} qui définit la fenêtre temporelle au cours de laquelle la potentialisation à long terme et la dépression à long terme sont prises en compte. En l'espèce, on suppose que les durées T_{LTP} et tLTD de ces deux phénomènes sont égales. Les valeurs Aₛₚₖ et A_{offsetmax}, qui forment respectivement les valeurs de tension la plus haute et la plus basse du potentiel d'action, sont réglées de sorte qu'il ne se produit pas de changement de conductance du memristor lorsque le potentiel d'action est isolé. Néanmoins la tension Aₛₚₖ - A_{offsetmax} est suffisamment grande pour entraîner un changement du poids synaptique.

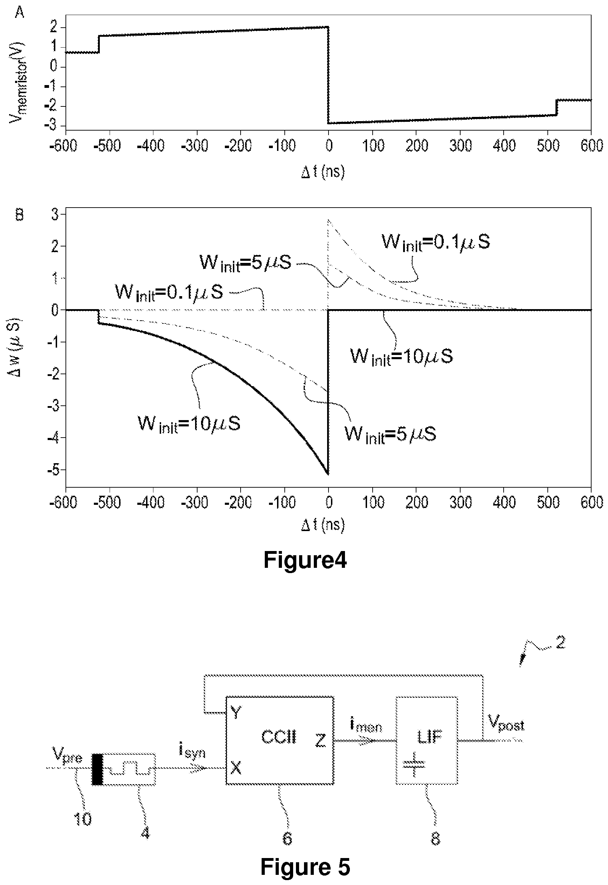

La partie supérieure de la figure 4 montre la correspondance entre la tension appliquée au memristor Vₘₑₘᵣᵢₛₜₒᵣ et la différence d'instants Δt entre les potentiels d'action pré- et postsynaptiques.

En partie inférieure, cette figure illustre la variation Δw de la conductance du memristor en fonction de Δt pour des valeurs initiales de conductance égales respectivement à 10 µS, 5 µS et 0,1 µS. On observe à ce sujet un effet d'hystérésis du memristor. Ces courbes montrent la représentation de la STDP dans un memristor bipolaire.

La durée séparant les potentiels d'action pré- et postsynaptiques devient une tension appliquée au memristor, comme illustré en partie supérieure de la figure 4. Compte tenu de la forme de potentiel d'action choisie, plus la valeur absolue de Δt = tₚₒₛₜ - tₚᵣₑ est proche de zéro, plus grande est la tension. Mais lorsque Δt est positive, la différence de potentiels est négative de sorte que la résistance décroît et la conductance (le poids synaptique) augmente et vice versa.

On a illustré à la figure 5 un exemple d'organe de neurone 2 selon l'invention. Il comprend un memristor 4 tel que précité, un convoyeur de courant 6 et un neurone artificiel 8. Le memristor 4 est placé pour jouer le rôle de synapse excitatrice du neurone 10 vers le neurone 8.

Le convoyeur de courant 6 est un convoyeur de courant de deuxième génération ou CCII. Il comprend des entrées X et Y et une sortie Z. De façon connue en elle-même, ce composant électronique fonctionne de la façon suivante. Lorsqu'un potentiel est appliqué à l'entrée Y, ce potentiel est recopié à l'entrée X. Par ailleurs, le convoyeur est agencé de sorte qu'il existe une constante telle que, quelle que soit l'intensité d'un courant reçu à une entrée du convoyeur à l'intérieur d'une plage de valeurs d'intensité prédéterminée, un courant sortant du convoyeur présente une intensité égale au produit de cette constante avec l'intensité du courant reçu. Cette constante peut être positive ou négative, entière ou non, et égale en valeur absolue à 1, 2, 10 par exemple. En l'espèce, ou bien le courant qui entre par l'entrée X est copié pour sortir à la sortie Z, ou bien il sort de la sortie Z un courant de même intensité mais orienté en sens inverse, selon que le convoyeur est du type CCII+ ou CCII-. La constante vaut donc que 1 ou -1. Le memristor 4 est connecté à l'entrée X du convoyeur.

Le neurone 8 est un neurone analogique sur silicium. Il s'agit ici d'un neurone intégratif à seuil et courant de fuite (*leaky integrate and fire neurone* ou LIF). Ce type de neurone constitue un bon compromis entre le domaine des neurones en silicium et l'efficacité en matière de calculs. Le condensateur de la membrane du neurone est chargé ou déchargé lorsqu'un potentiel d'action est envoyé par la synapse excitatrice ou inhibitrice. En l'espèce, la charge est effectuée par la partie négative du potentiel d'action. Le neurone se déclenche c'est-à-dire génère un potentiel d'action lorsque sa tension de membrane dépasse un seuil prédéterminé.

La sortie Z du convoyeur est connectée à une entrée du neurone 8. De plus, la sortie du neurone est connectée à l'entrée Y du convoyeur.

Ce montage constitue un montage générique qui peut être facilement reproduit en plusieurs exemplaires dans un réseau et utilisé avec des synapses excitatrices ou inhibitrices avec l'objectif de construire de grands réseaux de neurones pouvant remplir des fonctions de calcul.

Grâce aux propriétés du convoyeur de courant, le potentiel appliqué à l'entrée X suit celui appliqué à l'entrée Y et qui correspond au potentiel postsynaptique Vₚₒₛₜ. Par conséquent, la tension aux bornes du memristor est Vₚᵣₑ-Vₚₒₛₜ. Le courant fourni à l'entrée X, qui est le courant synaptique i_{syn}, est fourni à la sortie Z soit avec une polarité positive dans le cadre d'une synapse excitatrice soit avec une polarité négative dans le cas d'une synapse inhibitrice. Dès lors, le courant du memristor i_{syn} est toujours introduit dans le convoyeur et le courant iₘₑₘ sortant en Z est égal soit à i_{syn} soit à -i_{syn} selon que la synapse est excitatrice ou inhibitrice. Le choix du type de synapse est effectué grâce à un bit de configuration (non illustré sur la figure) qui règle le convoyeur avec une polarité soit positive soit négative.

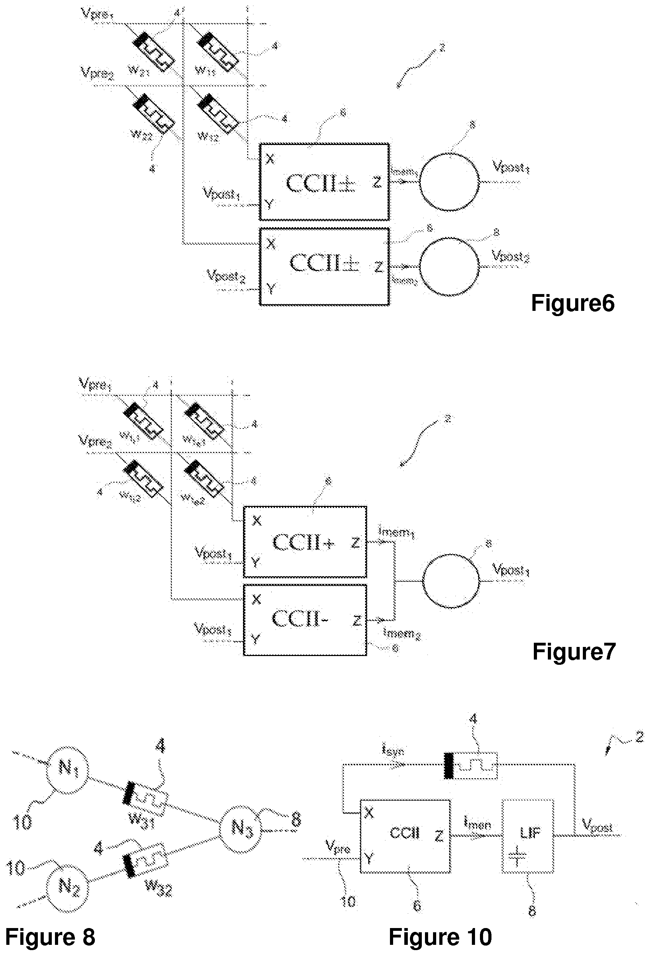

Cette solution a pour avantage de pouvoir être étendue à un grand réseau de neurones en prévoyant de disposer les memristors 4 en position transversale dans une matrice à lignes et colonnes, comme illustré aux figures 6 et 7.

On a ainsi représenté sur cette figure 6 un montage général comprenant des memristors 4 (notés W₁₁, W₁₂, W₂₁ et W₁₂). Ces memristors sont ici au nombre de quatre pour la clarté de l'explication mais il va de soi que leur nombre peut être plus élevé.

Les memristors W₁₁ et W₂₁ qui s'étendent sur une même première ligne de la matrice ont une borne connectée à un même potentiel Vₚᵣₑ₁. De même, les deux autres memristors W₁₂ et W₂₂ qui s'étendent sur une même deuxième ligne de la matrice ont une borne connectée à un même potentiel Vₚᵣₑ₂.

Le montage comprend deux convoyeurs de courant 6, identiques ou différents, excitateurs ou inhibiteurs.

L'autre borne des memristors W₁₁ et W₁₂, situés dans une même première colonne de la matrice, est connectée à l'entrée X d'un premier convoyeur 6 tandis que l'autre borne des memristors W₂₁ et W₂₂, situés dans une même deuxième colonne de la matrice, est connectée à l'entrée X du second convoyeur 6.

Le premier convoyeur 6 produit en sortie Z un courant iₘₑₘ₁ qui est la somme des courants i(W₁₁) et i(W₁₂) qui traversent respectivement les memristors W₁₁ et W₁₂. Ce courant iₘₑₘ₁ est envoyé à un premier neurone artificiel 8.

Le second convoyeur produit en sortie Z un courant iₘₑₘ₂ qui est la somme des courants i(W₂₁) et i(W₂₂) qui traversent respectivement les memristors W₂₁ et W₂₂. Ce courant iₘₑₘ₂ est envoyé à un second neurone artificiel 8.

A la figure 7, on a représenté un montage comprenant quatre memristors 4 (notés W₁ᵢ₁, W₁ₑ₂, W₁ᵢ₂, W_{1ₑ2}).

Les memristors W₁ᵢ₁ et W₁ₑ₁ qui s'étendent sur une même première ligne de la matrice en partant du haut ont une borne connectée à un même potentiel Vₚᵣₑ₁. De même, les deux autres memristors W₁ᵢ₂ et W₁ₑ₂ qui s'étendent sur une même deuxième ligne de la matrice ont une borne connectée à un même potentiel Vₚᵣₑ₂.

Le montage comprend deux convoyeurs de courant 6 respectivement de type CCII+ et CCII-.

L'autre borne des memristors W₁ᵢ₁ et W₁ᵢ₂, situés dans une même première colonne de la matrice, est connectée à l'entrée X du convoyeur inhibiteur 6, tandis que l'autre borne des memristors W₁ₑ₁ et W₁ₑ₂, situés dans une même deuxième colonne de la matrice, est connectée à l'entrée X du convoyeur excitateur 6. Ce dernier produit en sortie Z un courant iₘₑₘ₁ qui est la somme des courants i(W₁ₑ₁) et i(W₁ₑ₂) qui traversent respectivement les memristors W₁ₑ₁ et W₁ₑ₂. Le convoyeur inhibiteur produit en sortie Z un courant iₘₑₘ₂ qui présente une intensité égale à la somme des intensités des courants i(W₁ᵢ₁) et i(W₁ᵢ₂) qui traversent respectivement les memristors W₁ᵢ₁ et W₁ᵢ₂ mais de sens opposé. En aval des convoyeurs, les deux courants iₘₑₘ₁ et iₘₑₘ₂ sont additionnés et envoyés à un même neurone 8.

Un autre exemple de montage utilisé pour des simulations est illustré à la figure 8. Ce réseau comprend deux neurones présynaptiques 10 (N1 et N2) et un neurone postsynaptique 8 (N3) qui sont tous des neurones intégratifs à seuil et courant de fuite. Les deux neurones présynaptiques 10 sont connectés au neurone postsynaptique 8 par l'intermédiaire respectivement d'une synapse excitatrice W31 et d'une synapse inhibitrice W32 comportant chacune un memristor 4. A chaque memristor est associé un convoyeur de courant disposé entre le memristor et le neurone postsynaptique et qui n'a pas été illustré. Les convoyeurs et les neurones sont conçus selon une technologie CMOS à 0,18 µm de la société Austriamicrosystems. Chaque memristor 4 est modélisé pour la simulation sous la forme d'un modèle de memristor en langage Veriloga. Les simulations ont été effectuées avec l'outil Analog Design Environment de la société Cadence et de son simulateur Spectre.

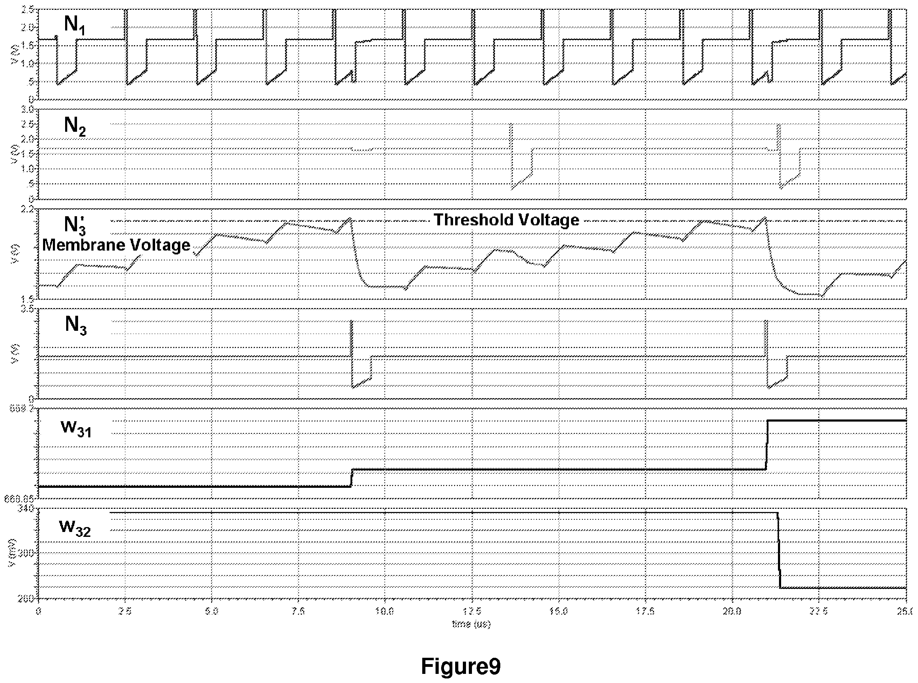

Le résultat des simulations est illustré à la figure 9. Celle-ci présente des courbes illustrant en fonction du temps l'évolution du potentiel ou de la différence de potentiels aux bornes des memristors et des neurones.

La courbe N₁ montre des potentiels d'action produits à un rythme régulier par le neurone N₁, ces potentiels ayant chacun la forme illustrée à la figure 3.

La synapse excitatrice associée avec son memristor W₃₁ charge donc le condensateur de membrane du neurone N₃, comme indiqué sur la courbe N'₃. Entre deux potentiels d'action successifs du neurone N₁, la tension de la membrane de N₃ baisse lentement en raison des courants de fuite s'agissant d'un neurone intégratif à seuil et courant de fuite. Aux environs de 9 µs, cette tension atteint le seuil qui déclenche le neurone N₃. Le neurone produit donc un potentiel d'action et sa tension de membrane est réinitialisée. À cet instant, on observe que la différence t_{N3} - t_{N1} est positive de sorte que la conductance du memristor change et augmente comme indiqué sur la courbe W₃₁. Auparavant, cette conductance était restée constante.

Aux environs de l'instant 13,5 µs, lorsque le neurone N₂ envoie à son tour un potentiel d'action, la synapse inhibitrice w₃₂ décharge le condensateur de membrane du neurone N₃. Dans ce cas, le neurone postsynaptique N₃ ne se déclenche pas et la conductance w₃₂, restée constante, ne change pas.

Aux environs de 21 µs, les potentiels d'action du neurone N₁ engendrent un potentiel d'action postsynaptique. La différence d'instants t_{N3} - t_{N1} est positive de sorte que la conductance w₃₁ augmente encore et que le potentiel de membrane de N₃ est réinitialisé.

Quelques centaines de nanosecondes plus tard, le neurone N₂ envoie un potentiel d'action. Ensuite, la tension de membrane du neurone N₃ continue de décroître en raison du courant de la synapse inhibitrice. Dans ce cas, la différence t_{N3} - t_{N2} est négative de sorte que la conductance W₃₂ décroît.

On a illustré à la figure 10 un montage constituant une variante de celui de la figure 5. Comme précédemment, le memristor 4 est connecté à l'entrée X du convoyeur 6. Mais il est aussi cette fois connecté à la sortie du neurone 8. Le potentiel Vₚᵣₑ du neurone présynaptique 10 est appliqué à l'entrée Y du convoyeur. Le reste du montage est inchangé.

Le fonctionnement est le même que celui de la figure 5. En effet, le convoyeur 6 recopie le potentiel Vₚᵣₑ de l'entrée Y vers l'entrée X de sorte que le memristor voit à ses bornes une différence de potentiel Vₚₒₛₜ - Vₚᵣₑ. Cette différence modifie la valeur de la conductance du memristor, ce qui représente le poids de la synapse réalisée.

Le convoyeur recopie le courant i_{syn} traversant le memristor sur le pôle Z de sorte que iₘₑₘ = α.i_{syn} ou iₘₑₘ = - α.i_{syn} selon le type de convoyeur, c'est-à-dire selon que l'on réalise une synapse excitatrice ou inhibitrice.

L'invention permet d'utiliser le phénomène de plasticité du memristor dans un réseau de neurones artificiels, pour réaliser une synapse excitatrice ou inhibitrice. L'invention permet donc de réaliser dans des réseaux de neurones des synapses memristives plastiques excitatrices ou inhibitrices.

Egalement, elle fournit une solution utilisant peu de surface de silicium.

De tels réseaux de neurones peuvent être utilisés pour des opérations de reconnaissance, d'exploration et de synthèse et plus généralement dans des applications de traitement de l'information.

Bien entendu, on pourra apporter à l'invention de nombreuses modifications sans sortir du cadre de celle-ci.

## Revendications

1. Organe (2) à neurone artificiel comprenant :
- au moins un neurone artificiel (8) présentant au moins un port de sortie et au moins un port d'entrée, et
- au moins un convoyeur de courant (6) ayant deux ports d'entrée X et Y, et un port de sortie Z ;
ledit organe (2) étant **caractérisé en ce qu'**il comprend également au moins un memristor (4) présentant deux bornes, et dans lequel :
- ledit memristor (4) est connecté par une de ses bornes au port d'entrée X dudit convoyeur (6) de courant ;
- ledit convoyeur de courant (6) est connecté par son port de sortie Z à un port d'entrée dudit neurone artificiel (8) ;
- ledit neurone artificiel (8) est connecté par un de ses ports de sortie au port d'entrée Y dudit convoyeur de courant (6) ou à une autre desdites bornes dudit memristor (4).

2. Organe selon la revendication précédente dans lequel ledit neurone artificiel (8) est un neurone à potentiel d'action.

3. Organe selon au moins l'une quelconque des revendications précédentes dans lequel ledit neurone (8) est un neurone intégratif à seuil et courant de fuite.

4. Organe selon au moins l'une quelconque des revendications précédentes dans lequel ledit neurone (8) présente un port de sortie unique.

5. Organe selon au moins l'une quelconque des revendications précédentes dans lequel ledit neurone (8) présente un port d'entrée unique.

6. Organe selon au moins l'une quelconque des revendications précédentes dans lequel ledit convoyeur de courant (6) est un convoyeur de deuxième génération.

7. Organe selon au moins l'une quelconque des revendications précédentes dans lequel ledit convoyeur (6) est agencé de sorte qu'il existe une constante telle que, quelle que soit l'intensité d'un courant reçu à une entrée du convoyeur à l'intérieur d'une plage de valeurs d'intensité prédéterminée, un courant sortant du convoyeur présente une intensité égale au produit de cette constante avec l'intensité du courant reçu.

8. Organe selon au moins l'une quelconque des revendications précédentes dans lequel ledit convoyeur (6) est agencé pour fournir à la sortie du convoyeur (6) un courant identique à un courant reçu à une entrée du convoyeur ou est agencé pour fournir à la sortie du convoyeur un courant de même intensité que le courant reçu et orienté en sens contraire.

9. Organe selon au moins l'une quelconque des revendications précédentes dans lequel le memristor (4) est un memristor à couche ferroélectrique.

10. Organe selon au moins l'une quelconque des revendications précédentes dans lequel :
- ledit memristor (4) est connecté par une de ses bornes au port d'entrée X dudit convoyeur (6) de courant ;
- ledit convoyeur de courant (6) est connecté par son port de sortie Z à un port d'entrée dudit neurone artificiel (8) ;
- ledit neurone artificiel (8) est connecté par un de ses ports de sortie au port d'entrée Y dudit convoyeur de courant (6).

11. Organe selon au moins l'une quelconque des revendications précédentes qui comprend au moins deux memristors (4), branchés en parallèle l'un par rapport à l'autre, et connectés au port d'entrée X d'un même convoyeur de courant (6).

12. Organe selon au moins l'une quelconque des revendications précédentes qui comprend au moins deux convoyeurs de courant (6) connectés par leurs ports de sortie Z à un port d'entrée d'un seul et même neurone artificiel (8).

13. Organe selon au moins l'une quelconque des revendications précédentes qui comprend des premier et deuxième convoyeurs (6), le premier convoyeur étant agencé pour fournir à la sortie du premier convoyeur un courant identique à un courant reçu à une entrée du premier convoyeur et le deuxième convoyeur (6) étant agencé pour fournir à la sortie du deuxième convoyeur un courant de même intensité qu'un courant reçu à une entrée du deuxième convoyeur et orienté en sens contraire.

14. Organe selon au moins l'une quelconque des revendications précédentes qui comprend des memristors (4) disposés en un réseau de memristors à branches transversales.

## Patentansprüche

1. Organ (2) mit einem künstlichen Neuron, welches aufweist:
- mindestens ein künstliches Neuron (8), welches mindestens einen Ausgangs-Anschluss und mindestens einen Eingangs-Anschluss aufweist, und
- mindestens einen Strom-Förderer (6), welcher zwei EingangsAnschlüsse X und Y und einen Ausgangs-Anschluss Z hat,
wobei das besagte Organ (2) **dadurch gekennzeichnet ist, dass** es auch mindestens einen Memristor (4) aufweist, der zwei Anschlussklemmen aufweist, und wobei:
- der besagte Memristor (4) mittels einer seiner Anschlussklemmen mit dem Eingangs-Anschluss X des besagten Förderers (6) von Strom verbunden ist,
- der besagte Strom-Förderer (6) mittels seines Ausgangs-Anschlusses Z mit einem Eingangs-Anschluss des besagten künstlichen Neurons (8) verbunden ist,
- das besagte künstliche Neuron (8) mittels eines seiner AusgangsAnschlüsse mit dem Eingangs-Anschluss Y des besagten Strom-Förderers (6) oder mit einer anderen der besagten Anschlussklemmen des besagten Memristors (4) verbunden ist.

2. Organ gemäß dem vorherigen Anspruch, wobei das besagte künstliche Neuron (8) ein Aktionspotential-Neuron ist.

3. Organ gemäß mindestens irgendeinem der vorherigen Ansprüche, wobei das besagte Neuron (8) ein integrierendes Neuron mit einem Schwellwert und einem Leckstrom ist.

4. Organ gemäß mindestens irgendeinem der vorherigen Ansprüche, wobei das besagte Neuron (8) einen einzigen Ausgangs-Anschluss aufweist.

5. Organ gemäß mindestens irgendeinem der vorherigen Ansprüche, wobei das besagte Neuron (8) einen einzigen Eingangs-Anschluss aufweist.

6. Organ gemäß mindestens irgendeinem der vorherigen Ansprüche, wobei der besagte Strom-Förderer (6) ein Förderer der zweiten Generation ist.

7. Organ gemäß mindestens irgendeinem der vorherigen Ansprüche, wobei der besagte Förderer (6) derart eingerichtet ist, dass eine Konstante existiert, sodass, ungeachtet der Intensität eines Stroms, der an einem Eingang des Förderers innerhalb eines Bereichs von Werten vorbestimmter Intensität empfangen wird, ein Strom, welcher den Förderer verlässt, eine Intensität aufweist, die gleich ist zu dem Produkt aus dieser Konstante mit der Intensität des empfangenen Stroms.

8. Organ gemäß mindestens irgendeinem der vorherigen Ansprüche, wobei der besagte Förderer (6) eingerichtet ist, um an dem Ausgang des Förderers (6) einen Strom bereitzustellen, der identisch ist zu einem Strom, der an einem Eingang des Förderers empfangen wird, oder eingerichtet ist, um an dem Ausgang des Förderers einen Strom der gleichen Intensität wie der des empfangenen Stroms und in entgegengesetzter Richtung orientiert bereitzustellen.

9. Organ gemäß mindestens irgendeinem der vorherigen Ansprüche, wobei der Memristor (4) ein Memristor mit einer ferroelektrischen Schicht ist.

10. Organ gemäß mindestens irgendeinem der vorherigen Ansprüche, wobei:
- der besagte Memristor (4) mittels einer seiner Anschlussklemmen mit dem Eingangs-Anschluss X des besagten Förderers (6) von Strom verbunden ist,
- der besagte Strom-Förderer (6) mittels seines Ausgangs-Anschlusses Z mit einem Eingangs-Anschluss des besagten künstlichen Neurons (8) verbunden ist,
- das besagte künstliche Neuron (8) mittels eines seiner AusgangsAnschlüsse mit dem Eingangs-Anschluss Y des besagten Strom-Förderers (6) verbunden ist.

11. Organ gemäß mindestens irgendeinem der vorherigen Ansprüche, welches mindestens zwei Memristoren (4) aufweist, die bezüglich einander parallel angeschlossen sind und mit dem Eingangs-Anschluss X eines gleichen Strom-Förderers (6) verbunden sind.

12. Organ gemäß mindestens irgendeinem der vorherigen Ansprüche, welches mindestens zwei Strom-Förderer (6) aufweist, die mittels ihrer AusgangsAnschlüsse Z mit einem Eingangs-Anschluss von ein und demselben künstlichen Neuron (8) verbunden sind.

13. Organ gemäß mindestens irgendeinem der vorherigen Ansprüche, welches einen ersten und einen zweiten Förderer (6) aufweist, wobei der erste Förderer eingerichtet ist, um an dem Ausgang des ersten Förderers einen Strom bereitzustellen, der identisch ist zu einem Strom, der an einem Eingang des ersten Förderers empfangen wird, und der zweite Förderer (6) eingerichtet ist, um an dem Ausgang des zweiten Förderers einen Strom der gleichen Intensität wie der eines an einem Eingang des zweiten Förderers empfangenen Stroms und in entgegengesetzter Richtung orientiert bereitzustellen.

14. Organ gemäß mindestens irgendeinem der vorherigen Ansprüche, welches Memristoren (4) aufweist, die in einem Netz von Memristoren mit Querverbindungen angeordnet sind.

## Claims

1. Artificial neuron organ (2) comprising:
- at least one artificial neuron (8) having at least one output port and at least one input port, and
- at least one current conveyor (6) having two input ports X and Y and one output port Z;
said organ (2) being **characterised in that** it also comprises at least one memristor (4) having two terminals, and wherein:
- said memristor (4) is connected by one of its terminals to the input port X of said current conveyor (6);
- said current conveyor (6) is connected by its output port Z to an input port of said artificial neuron (8);
- said artificial neuron (8) is connected by one of its output ports to the input port Y of said current conveyor (6) or to another of said terminals of said memristor (4).

2. Organ according to the preceding claim, wherein said artificial neuron (8) is a neuron with action potential.

3. Organ according to at least any one of the preceding claims, wherein said neuron (8) is an integrative neuron with threshold and leakage current.

4. Organ according to at least any one of the preceding claims, wherein said neuron (8) has a single output port.

5. Organ according to at least any one of the preceding claims, wherein said neuron (8) has a single input port.

6. Organ according to at least any one of the preceding claims, wherein said current conveyor (6) is a second-generation conveyor.

7. Organ according to at least any one of the preceding claims, wherein said conveyor (6) is so arranged that there is a constant such that, whatever the intensity of a current received at an input of the conveyor within a predetermined range of intensity values, a current leaving the conveyor has an intensity equal to the product of that constant and the intensity of the received current.

8. Organ according to at least any one of the preceding claims, wherein said conveyor (6) is arranged to provide at the output of the conveyor (6) a current identical to a current received at an input of the conveyor or is arranged to provide at the output of the conveyor a current having the same intensity as the received current and oriented in the opposite direction.

9. Organ according to at least any one of the preceding claims, wherein the memristor (4) is a memristor having a ferroelectric layer.

10. Organ according to at least any one of the preceding claims, wherein:
- said memristor (4) is connected by one of its terminals to the input port X of said current conveyor (6);
- said current conveyor (6) is connected by its output port Z to an input port of said artificial neuron (8);
- said artificial neuron (8) is connected by one of its output ports to the input port Y of said current conveyor (6).

11. Organ according to at least any one of the preceding claims, which organ comprises at least two memristors (4) which are connected in parallel relative to one another and are connected to the input port X of the same current conveyor (6).

12. Organ according to at least any one of the preceding claims, which organ comprises at least two current conveyors (6) connected by their output ports Z to an input port of the same, single artificial neuron (8).

13. Organ according to at least any one of the preceding claims, which organ comprises first and second conveyors (6), the first conveyor being arranged to provide at the output of the first conveyor a current identical to a current received at an input of the first conveyor, and the second conveyor (6) being arranged to provide at the output of the second conveyor a current having the same intensity as a current received at an input of the second conveyor and oriented in the opposite direction.

14. Organ according to at least any one of the preceding claims, which organ comprises memristors (4) arranged in a network of memristors with transverse branches.
